# FASCICULE DE BREVET EUROPEEN

(11) **EP 1 967 672 B1**
(45) Date de publication et mention de la délivrance du brevet: **13.01.2010**
(21) Numéro de dépôt: 08360003.1
(22) Date de dépôt: 05.03.2008
(51) Int. Cl.: E04H 4/00, E04H 4/12, C02F 3/32

(54) **Bassin notamment pour la baignade**
Becken insbesondere zum Baden
Pool, in particular for swimming

(30) Priorité: 05.03.2007 FR 0701570
(43) Date de publication de la demande: 10.09.2008
(73) Titulaire: Dreyer, Gilbert, 68720 Illfurth (FR)
(72) Inventeur: Dreyer, Gilbert, 68720 Illfurth (FR)
(74) Mandataire: Nithardt, Roland

(56) Documents cités:
- FR-A- 1 579 005
- FR-A- 2 784 983

## Description

### Domaine technique:

La présente invention concerne un bassin notamment pour la baignade, ce bassin étant constitué d'une excavation creusée dans le sol et étant rendue étanche au moyen d'une bâche d'étanchéité la recouvrant, ledit bassin comportant au moins une zone de baignade délimitée par une structure montée à l'intérieur dudit bassin étanche et pourvue de moyens d'ancrage au sol à travers ladite bâche d'étanchéité.

### Technique antérieure :

Traditionnellement, les zones de baignade ou piscines sont constituées d'une structure rigide délimitant un bassin à l'intérieur duquel on pose une membrane pour assurer l'étanchéité du bassin. La pose de cette membrane est très délicate et doit être réalisée par des professionnels pour éviter tant que faire ce peu les risques de fuite. En effet, cette membrane doit être soigneusement découpée et soudée ou collée dans les angles et les coins pour pouvoir s'adapter au volume intérieur du bassin. Ces zones de soudure ou de collage sont souvent renforcées par des bandes de membrane qui sont rapportées et collées ou soudées. Compte tenu de la complexité de la pose de l'étanchéité, la géométrie des piscines est généralement limitée à une forme parallélépipédique.

Par ailleurs, on cherche à supprimer l'utilisation de produits de désinfection à base de chlore pour améliorer la qualité de l'eau de ces piscines, respecter la santé des utilisateurs et permettre une gestion raisonnée de l'eau. Dans ce contexte, les piscines dites naturelles, appelées aussi étangs de baignade, se développent. Elles reposent notamment sur l'action aseptisante du soleil et l'action conjuguée de bactéries du cycle de l'azote et de plantes épuratrices. Ce type de bassin comporte deux zones importantes : une zone de baignade et une zone d'épuration ou zone de lagunage, et peut être complété par un système d'oxygénation de l'eau et par un circuit hydraulique mettant l'eau en circulation entre les différentes zones.

Un premier exemple d'étang de baignade est décrit dans la publication FR 1 579 005, qui comporte une excavation creusée dans le sol revêtue d'une bâche d'étanchéité et une cuve intérieure rigide, délimitant une zone de baignade, cette cuve étant soutenue par des poteaux fixés sur une poutre d'ancrage périphérique. Dans cet exemple, les poteaux sont assemblés à la poutre avant la pose de la bâche d'étanchéité, ce qui nécessite de découper la bâche pour permettre le passage des poteaux, ces poteaux étant ensuite recouverts d'une gaine étanche. Ce mode opératoire est donc très complexe, onéreux, et ne peut être effectué que par un personnel qualifié. La publication FR 1 579 005 décrit un bassin selon le préambule de la revendication 1.

Un second exemple d'étang de baignade est décrit dans la publication FR 2 784 983. Dans cet exemple, la structure délimitant la zone de baignade est posée directement sur une bâche d'étanchéité recouvrant le bassin. Cette solution qui consiste à prévoir une étanchéité à l'extérieur de la zone de baignade permet de s'affranchir de tous les problèmes liés à la pose de la bâche et aux risques de fuite. De plus, cette solution permet d'utiliser une bâche sans découpe et de pouvoir réaliser une zone de baignade de forme complexe sans limite. Toutefois, la structure de la zone de baignade étant posée sans ancrage au sol, le positionnement de la zone de baignade est aléatoire, rendant difficile la mise en place des infrastructures, telles que le circuit hydraulique, la filtration, la pompe, etc., qui doivent être prévues et positionnées préalablement à la pose de cette structure. De plus, les parois constituant cette structure, posées à même la bâche, risquent de l'abîmer accidentellement, provoquant des amorces de rupture et de fuite. Un exemple similaire est décrit dans la publication FR 2 028 116, dans lequel la zone de baignade est délimitée, à l'intérieur d'une excavation rendue étanche, par des plateformes et des cloisons sans aucun système d'ancrage.

Les solutions actuelles ne sont donc pas satisfaisantes. De plus, il n'existe à ce jour aucune structure de bassin pour la baignade de ce type proposée en kit pour pouvoir être montée facilement par l'utilisateur final sans avoir recours à un professionnel.

### Exposé de l'invention :

La présente invention offre une solution à ce problème en proposant un bassin pour la baignade de conception simple, fiable, durable, pouvant être mis en oeuvre aussi bien par des particuliers que par des professionnels, pouvant être proposé en kit, offrant une grande liberté d'aménagement paysagé et particulièrement conçu pour créer un bassin écologique, respectueux de l'environnement, avec un entretien très limité et facilité.

Dans ce but, l'invention concerne un bassin selon la revendication 1.

Ainsi, la zone de baignade est étanchéifiée par l'extérieur et la structure de la zone de baignade est sécurisée au sol comme une habitation, par un dispositif d'ancrage simple et rapide à mettre en oeuvre tout en garantissant une étanchéité fiable et durable.

Dans une forme de réalisation préférée, la structure comporte des poteaux espacés entre lesquels sont montés des panneaux, lesdits poteaux étant assemblés auxdits pieds d'ancrage.

Le socle peut comporter des logements borgnes pour recevoir lesdits organes de fixation et une couche de mastic d'étanchéité peut être ajoutée entre la platine et la bâche d'étanchéité.

La platine peut comporter une embase délimitant un logement pour recevoir un poteau. Dans ce cas, les panneaux de la structure sont par exemple fixés à l'intérieur des poteaux pour créer une surface intérieure plane et sans relief.

Dans une variante de réalisation, le poteau peut comporter un logement apte à recevoir l'embase d'une platine. Dans ce cas, le poteau comporte au moins deux encoches latérales aptes à recevoir par emboîtement au moins un panneau.

Le bassin comporte de préférence au moins une zone de lagunage disposée au moins en partie autour de la zone de baignade et la hauteur de la structure est de préférence inférieure à la hauteur du bassin pour que les zones puissent communiquer.

### Description sommaire des dessins :

La présente invention et ses avantages apparaîtront mieux dans la description suivante de plusieurs modes de réalisation donnés à titre d'exemple non limitatif, en référence aux dessins annexés, dans lesquels :
- la figure 1 est une vue de dessus d'un bassin selon l'invention,
- la figure 2 est une vue en coupe du bassin de la figure 1,
- la figure 3 est une vue de détail en coupe d'un poteau et de son pied d'ancrage,
- la figure 4 est une vue éclatée du pied d'ancrage seul,
- la figure 5 est une vue de dessus d'un poteau et de son pied d'ancrage selon une variante de réalisation,
- les figures 6A et 6B sont des vues de dessus, respectivement, du poteau seul de la figure 5 et d'un poteau d'angle, et
- la figure 7 est une vue de dessus partielle d'un panneau apte à s'emboiter entre deux poteaux des figures 5 et 6.

### Illustrations de l'invention :

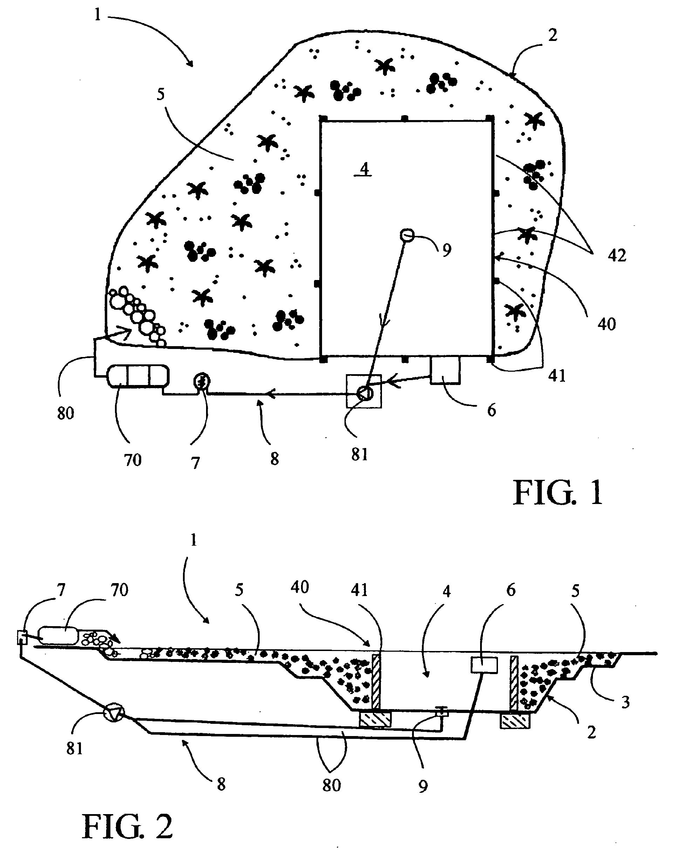

En référence aux figures 1 et 2, le bassin 1 selon l'invention est formé d'une excavation 2 creusée dans le sol et recouverte d'une bâche d'étanchéité 3. L'excavation 2 a un profil en cuvette avec des bords plus ou moins évasés et une forme, en vue de dessus, variable en fonction de l'espace disponible et de l'effet esthétique recherché. La bâche d'étanchéité 3 peut être réalisée dans tous matériaux appropriés et par exemple en une membrane de caoutchouc synthétique (EPDM) ou équivalent. Ce matériau présente de nombreux avantages. Il est inerte et a un impact réduit sur l'environnement grâce à sa composition non toxique. Il reste souple à basses températures, permettant une mise en place possible toute l'année. Il a une capacité d'allongement jusqu'à 300%, lui permettant d'épouser les formes de l'excavation et les mouvements du terrain. Il a une haute résistance aux poinçonnements. Sa composition chimique lui confère une résistance quasi-illimitée aux rayons UV et à l'ozone. Son installation est simple et rapide. Il est disponible en très grandes dimensions, et peut être facilement collé si besoin. Pour protéger la bâche d'étanchéité 3 contre les blessures pouvant être occasionnées par des cailloux, une feutrine (non représentée) non tissée, un géotextile, ou similaire, peut être posée sous la bâche. On peut également ajouter, notamment au niveau de la zone de baignade, une couche de sable fin (non représentée).

Le bassin 1 comporte une zone de baignade 4 délimitée par une structure 40 fermée, pouvant avoir une forme géométrique ou quelconque. Dans l'exemple représenté, la zone de baignade 4 a une forme rectangulaire pour simplifier les dessins. Elle est placée dans la zone du bassin 1 où la cuvette est la plus profonde et est entourée au moins partiellement d'une zone de lagunage 5, par exemple en forme de haricot qui favorise les mouvements de l'eau.

Cette zone de lagunage 5 doit avoir une superficie d'au moins 1/3 de la zone de baignade 4, et de préférence égale à la moitié de la zone de baignade 4. Pour une efficacité optimale, sa profondeur doit être relativement limitée et par exemple de 30 cm environ. Cette zone de lagunage 5 est le poumon du bassin 1 et a pour fonction principale d'épurer l'eau en éliminant les nitrates et les phosphates grâce aux plantations qu'elle contient. Elle a pour fonction supplémentaire de donner un aspect paysagé au bassin 1 pour qu'il se fonde harmonieusement dans l'environnement extérieur et pour créer une véritable zone de détente. Elle comporte, par exemple, une couche de galets qui assure le drainage et permet de créer une structure de lagune plus solide à moindre coût, une couche de substrat qui fournit un support aux plantes et aux bactéries, et une couche de gravier de décoration pour un meilleur rendu esthétique.

Le bassin 1 peut être complété par un récupérateur 6 (ou « skimmer » en anglais) qui élimine jusqu'à 85% de la pollution de surface (feuilles mortes, branchages, etc.) en les retenant dans un panier, et un stérilisateur 7 à rayons ultra violet qui permet l'élimination des algues unicellulaires ou microscopiques et la destruction des agents pathogènes de l'eau, ce stérilisateur 7 pouvant être associé à un filtre 70 biologique ou mécanique pour compléter la filtration de la zone de lagunage 5, et à une cascade pour assurer l'oxygénation de l'eau. Le bassin 1 peut également comporter un circuit hydraulique 8 pourvu de tuyauteries 80 raccordées à une pompe 81 pour faire circuler l'eau dans l'ensemble du système. Le bassin 1 peut aussi comporter, au point le plus bas de la zone de baignade 4, une bonde de fond 9 raccordée au circuit hydraulique 8 pour aspirer la pollution ayant tendance à décanter au fond du bassin (sable, terre, etc.).

### Différentes manières de réaliser l'invention :

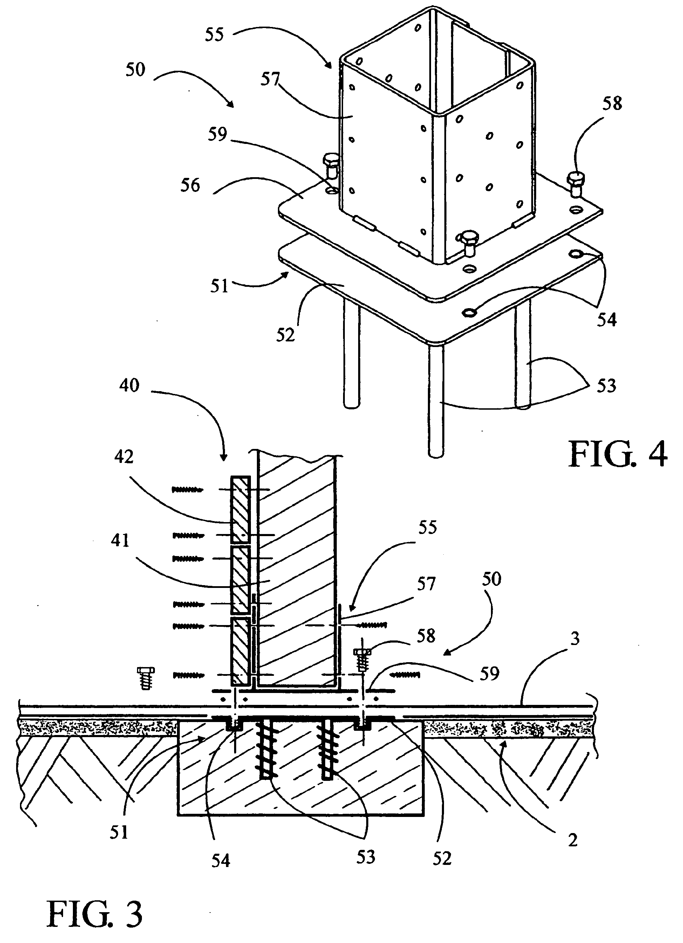

Dans l'exemple représenté aux figures 3 et 4, la structure 40 délimitant la zone de baignade 4 comporte un ensemble de poteaux 41 espacés et de panneaux 42 montés entre les poteaux 41 pour former les parois de cette structure 40, le fond de la zone de baignade 4 étant constitué par la bâche d'étanchéité 3. Ces poteaux 41 et panneaux 42 peuvent être réalisés dans toute matière adéquate, et par exemple en matières plastiques recyclées telles que le PVC ou similaire. Ce matériau offre plusieurs avantages : il a une forte rigidité, une grande résistance au martelage, au battage, aux dégradations naturelles (différences de température, rayons ultra violet, etc.), il est indestructible, imputrescible, a une grande durée de vie, n'est pas traité chimiquement, est d'un entretien facile et est peu coûteux, est léger et facile à installer, il peut être percé, clouté, scié, vissé, etc., il est recyclable, et auto isolant, c'est un produit stable et inerte, qui ne transmet aucun produit dans la terre ou dans l'eau, ne contient aucune particule métallique, existe en plusieurs coloris et peut être teinté dans la masse.

La structure 40 comporte des moyens d'ancrage au sol des poteaux 41 à travers la bâche d'étanchéité 3. Ces moyens comportent des pieds d'ancrage 50 aptes à maintenir les poteaux 41. Chaque pied d'ancrage 50 comporte un socle 51 formé d'une plaque 52, par exemple carrée, prolongée par le dessous par des tiges d'armature 53, ce socle 51 étant destiné à être serti dans une fondation en béton réalisée dans le sol, préalablement à la pose de la bâche d'étanchéité 3. Chaque pied d'ancrage 50 comporte une platine 55, complémentaire au socle 51, pourvue d'une plaque 56, par exemple carrée, surmontée d'une embase 57 formant un logement de section complémentaire à celle du poteau 51, dans laquelle il est logé par emboîtement. Le socle 51 et la platine 55 sont, par conséquent, disposés de part et d'autre de la bâche d'étanchéité 3 et assemblés par des organes de fixation traversant cette bâche d'étanchéité 3, qui peut être perforée localement. Les organes de fixation 58 peuvent être des vis, des boulons ou similaires, traversant des trous 59 de la platine 55 et vissés dans des logements ou trous borgnes 54 du socle 51. Les pieds d'ancrage 50 sont de préférence réalisés en acier galvanisé, inoxydable ou toute autre matière équivalente. L'étanchéité de la bâche 3 est préservée au niveau des pieds d'ancrage 50 : la perforation de la bâche est limitée au passage des organes de fixation 58, les trous borgnes 54 du socle 51 empêchent le passage de l'eau, une couche de mastic d'étanchéité formant un joint peut être ajoutée entre au moins la platine 55 et la bâche d'étanchéité 3, et l'assemblage est serré provoquant une compression locale de la bâche garantissant une étanchéité totale.

Ces pieds d'ancrage 50 sont positionnés de préférence à intervalle régulier, par exemple tous les 2 mètres, pour y recevoir les poteaux 41 à l'intérieur desquels sont fixés les panneaux 42 par exemple par cloutage, vissage ou similaire. L'étanchéité de la structure 40 de la zone de baignade 4 n'est pas importante puisqu'elle communique avec la zone de lagunage 5. De préférence, la hauteur de la structure 40 est inférieure à la hauteur du bassin 1 pour que les zones de baignage 4 et de lagunage 5 communiquent. Toutefois, la hauteur de la structure 40 dépasse la hauteur des couches de la zone de lagunage 5 pour assurer leur maintien.

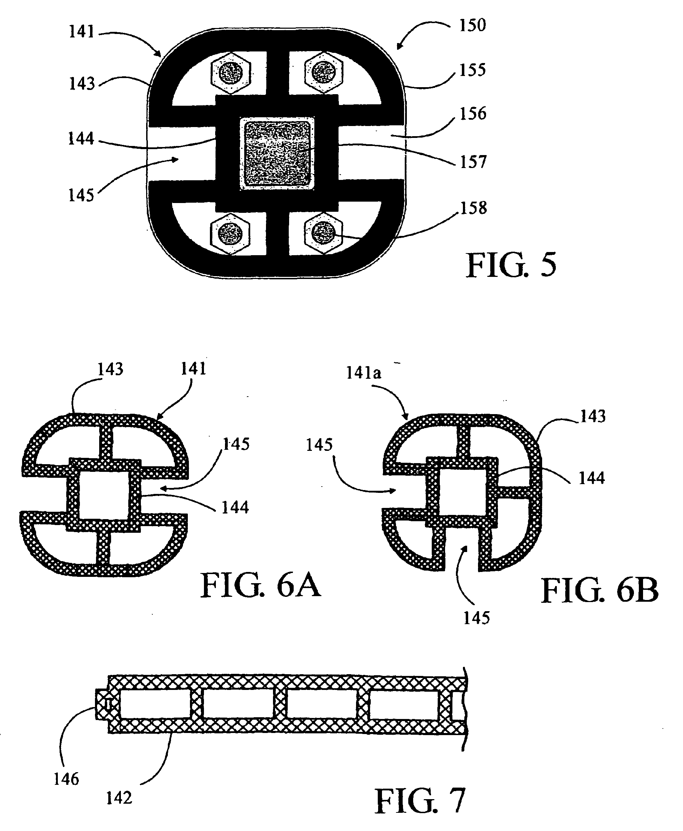

Les figures 5 à 7 illustrent une variante de réalisation des poteaux 141, 141a, de leur pieds d'ancrage 150, et des panneaux 142, dans laquelle les poteaux 141, 141a sont creux et aptes à s'emboîter sur l'embase 157 de la platine 155 des pieds d'ancrage 150. Dans cet exemple, chaque poteau 141, 141a comporte un pourtour 143 s'inscrivant sensiblement dans un carré, un logement central 144 carré pour recevoir l'embase 157 formée d'un tube carré plein, et deux encoches latérales 145 en U pour recevoir par emboîtement les extrémités 146 latérales des panneaux 142 formant des embouts mâles. Bien entendu toute autre forme peut convenir.

Les poteaux 141 prévus pour former les parois de la structure 40 comportent deux encoches 145 alignées (cf. fig. 5 et 6A) alors que les poteaux 141a prévus pour former les angles de la structure 40 comportent deux encoches 145 en angle droit (cf. fig. 6B). Ces poteaux 141, 141a, une fois assemblés aux pieds d'ancrage 150, ont la particularité de coiffer la platine 155 et simultanément les organes de fixation 158. Ce mode de réalisation permet de rendre invisibles les organes de fixation 158 à l'intérieur de la zone de baignade pour plus de sécurité. Ces poteaux 141, 141a et panneaux 142 sont avantageusement obtenus par extrusion de matières synthétiques. Les poteaux 141, 141a sont complétés par des couvercles (non représentés) destinés à obturer leur extrémité supérieure et à sécuriser la fixation des poteaux 141, 141a sur les pieds d'ancrage 150, notamment au moyen d'une tige filetée (non représentée) vissée dans l'embase 157 à travers le couvercle. Tout autre mode de fixation peut aussi convenir.

Bien entendu, la zone de baignade 4 peut être réalisée par toute autre structure 40 équivalente, qui comporte une ou plusieurs parois maintenues par des poteaux ancrés au sol, ces parois pouvant être obtenues par des éléments assemblés comme dans les exemples décrits, par des panneaux entiers, fixés et/ou emboîtés sur et/ou dans les poteaux, réalisés dans des matériaux différents, tels que du bois, des matières composites à base de bois et de résine, d'autres matières plastiques, etc. ayant au moins une surface plane ou lisse côté baignade, sans aspérité, la surface opposée pouvant être plane, nervurée, en nid d'abeille, ou similaire.

### Possibilités d'application industrielle:

Le bassin 1 selon l'invention a l'avantage de pouvoir être mis en oeuvre de manière simple et rapide, pour un résultat garanti tant au niveau de l'harmonie paysagée qu'il permet d'obtenir, que de la facilité de son entretien. Les éléments nécessaires pour sa fabrication, tels que les poteaux 41, 141, 141a, les panneaux 42, 142, les pieds d'ancrage 50, 150, la bâche d'étanchéité 3 et tous les accessoires techniques, peuvent être proposés à la vente sous la forme d'un kit prêt à poser, accessible aussi bien à un professionnel qu'à un particulier.

La présente invention est définie dans les revendications annexées.

## Revendications

1. Bassin (1) notamment pour la baignade, ce bassin étant constitué d'une excavation (2) creusée dans le sol et rendue étanche au moyen d'une bâche d'étanchéité (3) la recouvrant, ledit bassin (1) comportant au moins une zone de baignade (4) délimitée par une structure (40) montée à l'intérieur dudit bassin (1) étanche et pourvue de moyens d'ancrage (50, 150) au sol à travers ladite bâche d'étanchéité (3), lesdits moyens d'ancrage comportent des pieds d'ancrage (50, 150) pourvus chacun d'un socle (51) destiné à être serti dans une fondation en béton et d'une platine (55, 155) agencée pour recevoir un poteau (41, 141, 141a), **caractérisé en ce que** le socle (51) et la platine (55, 155) sont disposés de part et d'autre de la bâche d'étanchéité (3) et assemblés par des organes de fixation (58, 158) qui traversent ladite bâche d'étanchéité (3) et créent une étanchéité par compression entre ladite bâche (3) et ledit pied d'ancrage (50, 150).

2. Bassin selon la revendication 1, **caractérisé en ce que** ladite structure (40) comporte des poteaux (41, 141, 141a) espacés entre lesquels sont montés des panneaux (42, 142), lesdits poteaux (41) étant assemblés auxdits pieds d'ancrage (50, 150).

3. Bassin selon la revendication 1, **caractérisé en ce que** le socle (51) comporte des logements borgnes (54) pour recevoir lesdits organes de fixation (58, 158).

4. Bassin selon la revendication 1, **caractérisé en ce que** lesdits moyens d'ancrage comportent une couche de mastic d'étanchéité entre au moins ladite platine (55, 155) et ladite bâche d'étanchéité (3).

5. Bassin selon la revendication 1, **caractérisé en ce que** la platine (55) comporte une embase (57) délimitant un logement pour recevoir un poteau (41).

6. Bassin selon la revendication 2, **caractérisé en ce que** les panneaux (42) sont fixés à l'intérieur des poteaux (41).

7. Bassin selon la revendication 1, **caractérisé en ce que** le poteau (141, 141a) comporte un logement (144) apte à recevoir l'embase (157) d'une platine (155).

8. Bassin selon la revendication 7, **caractérisé en ce que** le poteau (141, 141a) comporte au moins deux encoches latérales (155) aptes à recevoir par emboîtement au moins un panneau (142).

9. Bassin selon la revendication 1, **caractérisé en ce que** la hauteur de ladite structure (40) est inférieure à la hauteur du bassin (1).

10. Bassin selon la revendication 1, **caractérisé en ce qu'**il comporte au moins une zone de lagunage (5) disposée au moins en partie autour de ladite zone de baignade (4).

## Claims

1. A pool (1) especially for bathing, this pool being formed by an excavation (2) dug in the ground and made watertight by means of a waterproof tarpaulin (3) covering it, the said pool (1) comprising at least one bathing zone (4) delimited by a structure (40) mounted inside the said watertight pool (1) and provided with means (50, 150) for anchoring to the ground through the said tarpaulin (3), the said anchoring means comprise anchoring feet (50, 150) each provided with a pedestal (51) intended to be set in a concrete foundation and with a bearing plate (55, 155) designed to receive a post (41, 141, 141a), **characterised in that** the pedestal (51) and the bearing plate (55, 155) are disposed on either side of the waterproof tarpaulin (3) and are joined by attachment devices (58, 158) that pass through the said waterproof tarpaulin (3) and create a compression seal between the said tarpaulin (3) and the said anchoring foot (50, 150).

2. A pool according to Claim 1, **characterised in that** the said structure (40) comprises spaced posts (41, 141, 141a) between which there are mounted panels (42, 142), the said posts (41) being joined to the said anchoring feet (50, 150).

3. A pool according to Claim 1, **characterised in that** the pedestal (51) comprises blind receptacles (54) to receive the attachment devices (58, 158).

4. A pool according to Claim 1, **characterised in that** the said anchoring means comprise a layer of mastic sealing compound between at least the said bearing plate (55, 155) and the said waterproof tarpaulin (3).

5. A pool according to Claim 1, **characterised in that** the bearing plate (55) comprises a base (57) delimiting a receptacle to receive a post (41).

6. A pool according to Claim 2, **characterised in that** the panels (42) are fixed to the inside of the posts (41).

7. A pool according to Claim 1, **characterised in that** the post (141, 141a) comprises a receptacle (144) capable of receiving the base (157) of a bearing plate (155).

8. A pool according to Claim 7, **characterised in that** the post (141, 141a) comprises at least two lateral notches (155) capable of receiving at least one panel (142) by interlocking.

9. A pool according to Claim 1, **characterised in that** the height of the said structure (40) is less than the height of the pool (1).

10. A pool according to Claim 1, **characterised in that** it comprises at least one lagooning zone (5) disposed at least partially around the said bathing zone (4).

## Patentansprüche

1. Becken (1), insbesondere zum Baden, wobei das Becken aus einer in den Boden gegrabenen Grube (2) besteht, die mittels einer Dichtungsplane (3) abgedichtet ist, die dieselbe bedeckt, wobei das Becken (1) mindestens eine Badezone (4) aufweist, die durch eine im Inneren des Beckens (1) angebrachte dichte Konstruktion (40) abgedichtet ist, die mit Einrichtungen (50,150) zur Verankerung im Boden über der Dichtungsplane (3) versehen ist, wobei die Verankerungseinrichtungen Verankerungsfüße (50,150) aufweisen, die jeweils einen Sockel (51), der dafür vorgesehen ist, in ein Betonfundament eingesetzt zu werden, und eine Platte (55,155) aufweisen, die angeordnet ist, um einen Pfosten (41,141,141 a) aufzunehmen, **dadurch gekennzeichnet, dass** der Sockel (51) und die Platte (55,155) beiderseits der Dichtungsplane (3) angeordnet und mittels Befestigungselementen (58,158) zusammengesetzt sind, welche die Dichtungsplane (3) durchqueren und eine Dichtigkeit durch Kompression zwischen der Plane (3) und dem Verankerungsfuß (50,150) erzeugen.

2. Becken nach Anspruch 1, **dadurch gekennzeichnet, dass** die Konstruktion (40) beabstandete Pfosten (41,141,141a) aufweist, zwischen denen Plattenelemente (42,142) angebracht sind, wobei die Pfosten (41) an den Verankerungsfüßen (50,150) angebracht sind.

3. Becken nach Anspruch 1, **dadurch gekennzeichnet, dass** der Sockel (51) Blindaufnahmen (54) aufweist, um die Befestigungselemente (58,158) aufzunehmen.

4. Becken nach Anspruch 1, **dadurch gekennzeichnet, dass** die Verankerungseinrichtungen eine Schicht aus Dichtungsmasse mindestens zwischen der Platte (55,155) und der Dichtungsplane (3) aufweisen.

5. Becken nach Anspruch 1, **dadurch gekennzeichnet, dass** die Platte (55) eine Basis (57) aufweist, die eine Aufnahme begrenzt, um einen Pfosten (41) aufzunehmen.

6. Becken nach Anspruch 2, **dadurch gekennzeichnet, dass** die Plattenelemente (42) im Inneren der Pfosten (41) befestigt sind.

7. Becken nach Anspruch 1, **dadurch gekennzeichnet, dass** der Pfosten (141,141a) eine Aufnahme (144) aufweist, die in der Lage ist, die Basis (157) einer Platte (155) aufzunehmen.

8. Becken nach Anspruch 7, **dadurch gekennzeichnet, dass** der Pfosten (141,141a) mindestens zwei seitliche Aussparungen (155) aufweist, die in der Lage sind, mindestens ein Plattenelement (142) durch Einpassung aufzunehmen.

9. Becken nach Anspruch 1, **dadurch gekennzeichnet, dass** die Höhe der Konstruktion (40) niedriger als die Höhe des Beckens (1) ist.

10. Becken nach Anspruch 1, **dadurch gekennzeichnet, dass** es mindestens eine Klärungszone (5) aufweist, die mindestens teilweise um die Badezone (4) herum angeordnet ist.
